(19) **Europäisches Patentamt**

**European Patent Office**

**Office européen des brevets**

(11) **EP 1 509 417 B1**

(12) **FASCICULE DE BREVET EUROPEEN**

(45) Date de publication et mention
de la délivrance du brevet:
**14.06.2006 Bulletin 2006/24**

(21) Numéro de dépôt: **03756004.2**

(22) Date de dépôt: **23.05.2003**

(51) Int Cl.:
***B60H 1/32*** *(2006.01)*

(86) Numéro de dépôt international:
**PCT/FR2003/001561**

(87) Numéro de publication internationale:
**WO 2003/101770 (11.12.2003 Gazette 2003/50)**

(54) **INSTALLATION DE CLIMATISATION DE VEHICULE MUNIE D'UN DISPOSITIF ELECTRONIQUE DE CONTROLE**

FAHRZEUGKLIMAANLAGENEINHEIT MIT ELEKTRONISCHER STEUERVORRICHTUNG

VEHICLE AIR-CONDITIONER UNIT WITH AN ELECTRONIC CONTROL DEVICE

(84) Etats contractants désignés:
**AT BE BG CH CY CZ DE DK EE ES FI FR GB GR
HU IE IT LI LU MC NL PT RO SE SI SK TR**

(30) Priorité: **31.05.2002 FR 0206724**

(43) Date de publication de la demande:
**02.03.2005 Bulletin 2005/09**

(73) Titulaire: **VALEO SYSTEMES THERMIQUES
78320 Le Mesnil Saint-Denis (FR)**

(72) Inventeur: **BEN YAHIA, Mohamed
F-75005 Paris (FR)**

(56) Documents cités:
**EP-A- 1 148 272      DE-A- 10 126 524
US-A- 5 924 296**

**Description**

L'invention concerne les circuits de climatisation des véhicules à moteur.

Dans les véhicules à moteur classiques, le compresseur du circuit de climatisation est entraîné par le moteur et consomme donc une partie de la puissance du moteur. Bien que la puissance absorbée par le compresseur, quand il est en marche, ne soit pas importante, elle influe tout de même sur le rendement du moteur. En diminuant le rendement du moteur, la puissance absorbée réellement par le compresseur augmente la consommation de carburant et la pollution générée par les gaz d'échappement du véhicule.

Pour optimiser le rendement du moteur, une solution consiste à estimer la puissance instantanée réellement absorbée par le compresseur. La connaissance de cette information permet, en effet, d'adapter les paramètres d'injection du moteur aux besoins réels. En l'absence de cette information, le calculateur d'injection choisit, par défaut, des paramètres d'injection correspondant à la valeur maximale de la puissance absorbée, valeur qui est rarement atteinte en pratique.

Cet inconvénient peut concerner les compresseurs mécaniques à contrôle interne qui fonctionnent par l'intermédiaire de l'embrayage interposé entre le moteur et le compresseur. En mode régulé, les compresseurs à contrôle interne adaptent leur cylindrée suivant une loi linéaire reliant la valeur de la pression en entrée du compresseur, dite basse pression à la valeur de sortie du compresseur, dite haute pression. Pourtant, il arrive que la puissance réellement absorbée par le compresseur soit inférieure à sa puissance nominale.

De tels compresseurs absorbent une puissance qui dépend des conditions de fonctionnement et qui ne peut donc être réduite, même si on connaît la puissance réellement absorbée par le compresseur. En revanche, il est possible de réguler le fonctionnement de la climatisation en débrayant le compresseur lorsque la puissance n'est pas acceptable.

Cet inconvénient est encore plus gênant pour les compresseurs à contrôle externe, dont l'utilisation se généralise.

En effet, dans les compresseurs mécaniques à contrôle externe, la puissance réellement absorbée par le compresseur est souvent inférieure à sa puissance nominale. Par suite, l'injection doit compenser l'écart entre la puissance mécanique nominale et la puissance mécanique réellement absorbée, ce qui diminue le rendement du moteur.

Dans des réalisations connues, l'estimation de la puissance instantanée absorbée par le compresseur est obtenue à partir d'une cartographie des états de fonctionnement les plus usités. L'estimation de la puissance absorbée par le compresseur est réalisée en comparant l'état de fonctionnement du circuit de climatisation à un état de référence faisant partie de la cartographie, en utilisant la valeur instantanée de la haute pression mesurée par un premier capteur et une information relative au fonctionnement du véhicule mesurée par un deuxième capteur. Les méthodes basées sur une telle cartographie requièrent des temps de développement importants et sont empiriques. En particulier, elles présentent l'inconvénient de ne pas prendre en compte tous les cas possibles de fonctionnement et sont donc approximatives.

Certaines réalisations existantes se fondent sur l'état de fonctionnement du circuit de climatisation, pour estimer la puissance absorbée par le compresseur. En revanche, elles ne prennent pas en compte le mode particulier de fonctionnement de l'organe de détente. Document DE-A-10126524 montre une telle installation comprenant les éléments du préambule de la première revendication.

C'est un but de la présente invention de proposer un dispositif propre à fournir une estimation de la puissance absorbée par le compresseur à partir d'une estimation du débit massique du fluide frigorigène détendu dans un organe de détente.

C'est encore un but de la présente invention de proposer un tel dispositif propre à estimer le débit massique du fluide frigorigène détendu dans l'organe de détente, à partir du mode de fonctionnement de l'organe de détente.

A cet effet, l'invention propose une installation de climatisation pour véhicule à moteur munie d'un calculateur d'injection et d'un régulateur de climatisation,

l'installation comprenant un circuit de fluide frigorigène comprenant un compresseur, un organe de refroidissement, un organe de détente et un évaporateur,

ainsi qu'un dispositif électronique de contrôle destiné à interagir avec le circuit de fluide frigorigène, le calculateur d'injection et le régulateur de climatisation.

Avantageusement, l'installation comprend des organes de mesures propres à transmettre des valeurs au dispositif électronique de contrôle pour l'estimation :

- d'une première valeur relative à la température du liquide en entrée de l'organe de détente,
- d'une deuxième valeur relative à la pression en entrée de l'organe de détente,
- d'une troisième valeur relative à la pression en sortie de l'organe de détente,

et le dispositif électronique de contrôle est apte à calculer la valeur du débit massique du fluide frigorigène dans l'organe de détente à partir de l'estimation desdites première, deuxième et troisième valeurs, et à estimer, à partir de cette valeur du débit massique du fluide frigorigène dans l'organe de détente et de l'estimation de la troisième valeur, la puissance absorbée par le compresseur.

Dans une première forme de réalisation, l'organe de détente est un orifice de section fixe tandis que l'organe de refroidissement est un condenseur.

Dans une deuxième forme de réalisation, l'installation comprend un échangeur thermique interne tandis que l'organe de détente est un orifice de section variable et que le fluide frigorigène est supercritique.

Dans une variante, selon la deuxième forme de réalisation, l'organe de détente est une vanne électrique tandis que le débit massique du fluide frigorigène est en outre estimé à partir de la valeur de l'intensité de la vanne électrique fournie par le régulateur de climatisation.

Selon une caractéristique de l'invention, la première valeur est mesurée par un organe de mesure, placé à l'entrée de l'organe de détente.

Selon une autre caractéristique de l'invention, la deuxième valeur est mesurée par un organe de mesure placé à l'entrée de l'organe de détente.

Dans une variante de la première forme de réalisation, le dispositif électronique de contrôle est propre à calculer une estimation de la première valeur à partir d'informations relatives aufonctionnement du véhicule, transmises par le calculateur d'injection et de la deuxième valeur.

En particulier, ces informations relatives au fonctionnement du véhicule sont la vitesse d'avancement du véhicule, la tension du groupe moto-ventilateur du circuit de climatisation et la température du flux d'air extérieur.

Selon une caractéristique de la deuxième forme de réalisation, l'installation comprend un premier organe de mesure propre à fournir une valeur relative à la température en sortie de l'organe de refroidissement.

Selon une autre caractéristique de l'invention, l'installation comprend un deuxième organe de mesure propre à fournir une valeur relative à la température d'évaporation.

En particulier, le deuxième organe de mesure est une sonde, placée dans les ailettes de l'évaporateur qui fournit une mesure de la valeur instantanée de la température d'évaporation.

Dans une variante, le dispositif électronique de contrôle est apte à estimer la valeur de la température d'évaporation à partir de la valeur instantanée de la température d'air soufflé en sortie de l'évaporateur fournie par le régulateur d'habitacle.

Selon la deuxième forme de réalisation, le dispositif électronique de contrôle est propre à calculer une estimation de la première valeur à partir des valeurs fournies par le premier et le deuxième organe de mesure.

Dans un mode de réalisation avantageux de l'invention, le dispositif électronique de contrôle est propre à estimer la troisième valeur à partir de la valeur fournie par le deuxième organe de mesure.

Dans une première variante de l'invention, le compresseur est un compresseur à contrôle externe, muni d'une vanne de contrôle tandis que le dispositif électronique de contrôle est propre à calculer une première estimation de la troisième valeur à partir de valeurs pré-enregistrées de la pression d'aspiration du compresseur, de la deuxième valeur et de la valeur de l'intensité de la vanne de contrôle du compresseur transmise par le calculateur d'injection.

Dans une deuxième variante, le compresseur est un compresseur à contrôle interne tandis que le dispositif électronique de contrôle est propre à calculer une première estimation de la troisième valeur à partir de valeurs pré-enregistrées de la pression d'aspiration du compresseur, et de la deuxième valeur.

Dans une troisième variante, le compresseur est un compresseur à cylindrée fixe tandis que le dispositif électronique de contrôle est propre à calculer une première estimation de la troisième valeur à partir de valeurs pré-enregistrées de la pression d'aspiration du compresseur, et de la deuxième valeur.

Selon l'une de ces trois variantes, le dispositif électronique de contrôle est propre à fournir une estimation du débit massique du compresseur en cylindrée maximale à partir de la deuxième et de la troisième valeur.

En complément, le dispositif électronique de contrôle est propre à ajuster la première estimation de la troisième valeur en comparant le débit massique estimé du fluide frigorigène dans l'organe de détente au débit massique du compresseur en cylindrée maximale.

Avantageusement, le dispositif électronique de contrôle est apte à ajuster la première estimation de la troisième valeur par un facteur de correction, lorsque le débit massique du fluide frigorigène dans l'organe de détente est supérieur au débit massique du compresseur en cylindrée maximale.

En particulier, le facteur de correction est relatif au rapport entre le débit massique du fluide frigorigène dans l'organe de détente et le débit massique du compresseur en cylindrée maximale.

Selon une autre caractéristique de l'invention, la troisième valeur peut être fournie par un organe de mesure placé à l'entrée du compresseur.

Selon la deuxième forme de réalisation, la puissance absorbée par le compresseur est en outre estimée à partir de la valeur relative à la température en sortie de l'organe de refroidissement.

L'invention couvre également un programme-produit, qui peut être défini comme comprenant les fonctions mises en oeuvre pour estimer la puissance absorbée par le compresseur.

- la figure 1 représente un exemple de vue d'ensemble d'un dispositif de climatisation installé à bord d'un véhicule,
- les figures 2a et 2b sont des schémas d'une installation de véhicule automobile à moteur muni d'un dispositif de contrôle, selon une première forme de réalisation de l'invention,
- les figures 2c et 2d sont des schémas d'une installation de véhicule automobile à moteur, muni du dispositif de contrôle selon une deuxième forme de réalisation de l'invention,
- la figure 3 illustre le fonctionnement d'un condenseur,
- la figure 4 est un organigramme illustrant les différentes étapes mises en oeuvre par l'installation selon l'invention, dans une forme de réalisation particulière,
- la figure 5 est un diagramme illustrant la courbe de régulation d'un compresseur à contrôle externe,
- la figure 6 est un schéma d'une installation de véhicule automobile à moteur, selon la deuxième forme de réalisation,
- la figure 7 illustre la précision de l'estimation selon l'invention, et
- la figure 8 représente l'intégration d'une sonde dans l'évaporateur.

L'annexe A comporte des équations mathématiques principales utilisées pour mettre en oeuvre l'installation.

Les dessins contiennent, pour l'essentiel, des éléments de caractère certain. Ils pourront donc non seulement servir à mieux faire comprendre la description, mais aussi contribuer à la définition de l'invention, le cas échéant.

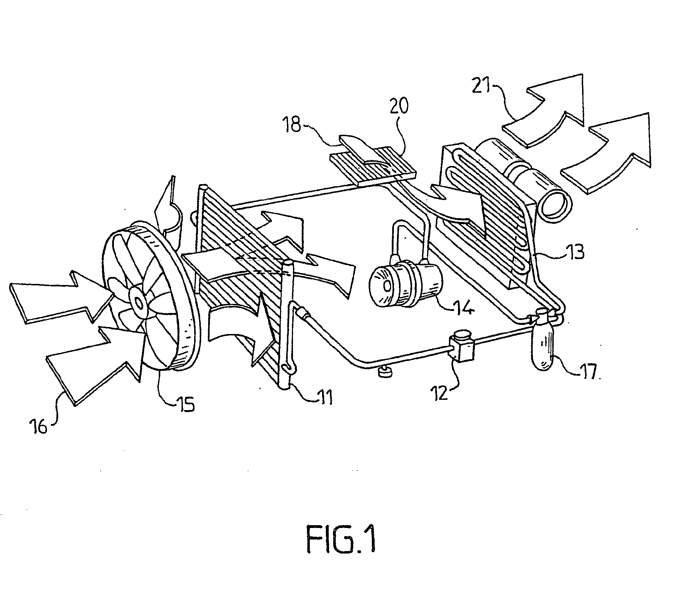

On se réfère tout d'abord à la figure 1 qui représente un exemple de vue d'ensemble d'un appareil de climatisation intégré à un véhicule. L'appareil de climatisation comprend un circuit fermé de fluide frigorigène. L'appareil de climatisation comprend également un compresseur 14, un organe de refroidissement 11, un organe de détente 12 et un évaporateur 13, parcourus dans cet ordre par le fluide frigorigène. Le circuit peut en outre comporter un accumulateur 17 placé entre la sortie de l'évaporateur et l'entrée du compresseur pour éviter les coups de liquide.

L'organe de refroidissement 11 reçoit un flux d'air extérieur 16 pour évacuer la chaleur prélevée dans l'habitacle, qui dans certaines conditions de fonctionnement est mis en mouvement par un groupe moto-ventilateur 15.

L'évaporateur 13 reçoit un flux d'air d'un pulseur 20 alimenté par un flux d'air extérieur 18 et produit un flux d'air climatisé 21 qui est envoyé vers l'habitacle du véhicule.

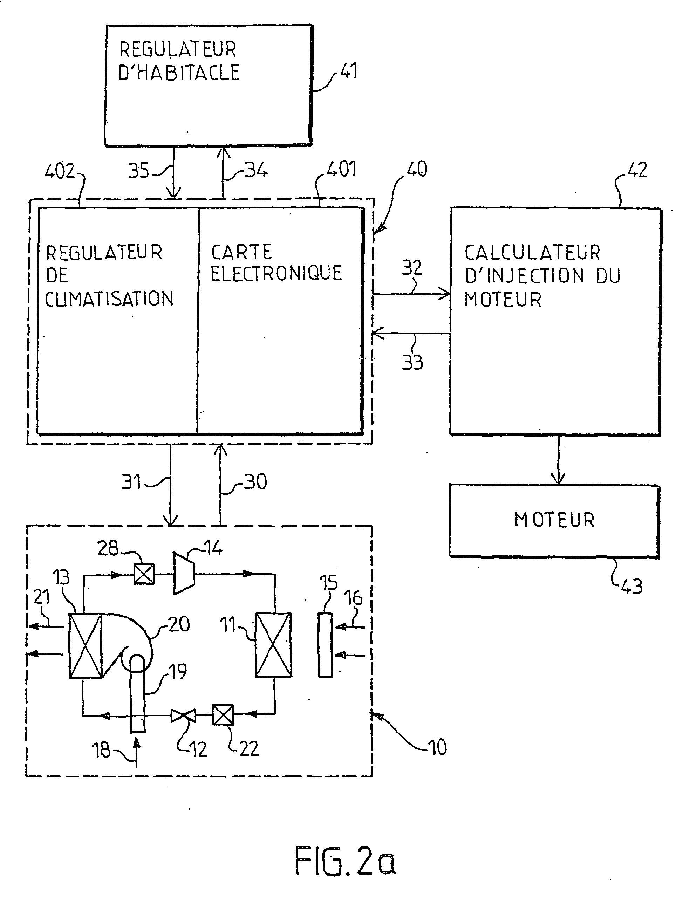

La figure 2a représente l'installation, selon la présente invention, mise en place dans un véhicule automobile, éventuellement en mouvement selon une vitesse d'avancement Va. Le véhicule automobile est animé par un moteur 43, commandé par un calculateur d'injection 42. Le calculateur reçoit des informations de divers capteurs qu'il interprète pour ajuster les paramètres. Il peut donc fournir des informations 33 sur des valeurs instantanées relatives au fonctionnement du véhicule, et notamment la vitesse d'avancement du véhicule, la vitesse de rotation du compresseur et la tension du groupe moto-ventilateur.

Le véhicule est également équipé de l'appareil de climatisation 10 décrit ci-dessus, représenté schématiquement sur la figure 2a. De plus, l'installation comprend un régulateur d'habitacle 41 destiné à fixer la consigne de température de l'air extérieur 18, soufflé à l'entrée de l'évaporateur 13.

Le calculateur d'injection du moteur peut agir sur l'appareil de climatisation grâce à un régulateur de climatisation 402. Cette liaison permet uniquement de commander la mise en marche ou l'arrêt de l'appareil de climatisation selon les conditions liées au fonctionnement du moteur ou aux commandes externes. Par exemple, elle permet d'interdire la mise en marche de l'appareil de la climatisation lorsque le moteur est fortement sollicité.

Cette liaison 402 se limite à ce fonctionnement en "tout ou rien". En l'absence d'un dispositif pour estimer instantanément la puissance absorbée par un compresseur mécanique, le régulateur de climatisation 402 ne peut ajuster le fonctionnement de la boucle de climatisation.

La Demanderesse a mis en place un tel dispositif permettant d'améliorer ce fonctionnement, à partir des conditions de pression et de température en entrée et en sortie de l'organe de détente.

Pour cela, le régulateur de l'habitacle 41, le calculateur d'injection du moteur 42 et l'appareil de climatisation 10 sont reliés à un dispositif électronique de contrôle, par exemple une carte électronique 401, pour un échange bidirectionnel d'informations.

La carte électronique met en oeuvre la résolution des équations qui permettent d'obtenir une estimation de la puissance absorbée par le compresseur. Elle est en outre capable de transmettre les informations qui résultent de cette estimation au calculateur d'injection, par la liaison 32.

La carte électronique 401 peut-être considérée comme partie intégrante du régulateur de climatisation 402. Le régulateur de climatisation 402 a notamment le rôle d'adapter la quantité de chaleur prélevée dans l'habitacle, dite puissance frigorifique, pour atteindre la consigne d'air soufflé à la sortie de l'évaporateur. Cette consigne est préalablement indiquée au régulateur de climatisation 402 par le régulateur d'habitacle (liaison 35).

La carte électronique 401 récupère des informations 30 provenant de capteurs mis en place sur l'appareil de climatisation. Elle reçoit également des informations du calculateur d'injection du moteur 42 par la liaison 33, en particulier la vitesse d'avancement du véhicule, la tension du groupe moto-ventilateur, la vitesse de rotation du compresseur et la température de l'air extérieur.

Le régulateur d'habitacle 41 échange des informations avec le régulateur de climatisation relatives à la consigne d'air soufflé à la sortie de l'évaporateur, au moyen des liaisons 34 et 35.

Le débit du fluide frigorigène détendu à travers un organe de détente est de la forme:

$$m_{OT} = f(T_{in}, P_{in}, P_{out}) \; (1),$$

où $T_{in}$ désigne la température en entrée de l'organe de détente et $P_{in}$, $P_{out}$ désignent respectivement la pression en entrée et en sortie de l'organe de détente, $P_{in}$ étant du côté haute pression et $P_{out}$ du côté basse pression du circuit de climatisation.

La puissance absorbée par le compresseur peut être alors calculée à partir de l'estimation du débit massique de fluide frigorigène détendu à travers l'organe de détente selon la relation (1), et de la température d'aspiration du compresseur.

La carte électronique est programmée pour mettre en oeuvre, au préalable, la résolution de l'équation fournissant la valeur du débit $m_{OT}$ (1), à partir des caractéristiques de fonctionnement de l'organe de détente ($T_{in}$, $P_{in}$, $P_{out}$). La carte électronique est en outre programmée pour estimer les caractéristiques $T_{in}$, $P_{in}$, $P_{out}$.

Les liaisons 30, 33 et 35 de la carte électronique 401 avec l'appareil de climatisation 10, le calculateur d'injection du moteur 42 et le régulateur de l'habitacle 41 permettent de réaliser ces estimations.

Dans une première forme de réalisation, le circuit de climatisation est parcouru par un fluide frigorigène souscritique, c'est-à-dire un fluide ayant une pression critique supérieure à la pression de la source chaude, et comprend un organe de détente 12 de type orifice calibré ainsi qu'un organe de refroidissement de type condenseur 11. En particulier, la description sera faite en référence au fluide frigorigène R134a à titre d'exemple non limitatif.

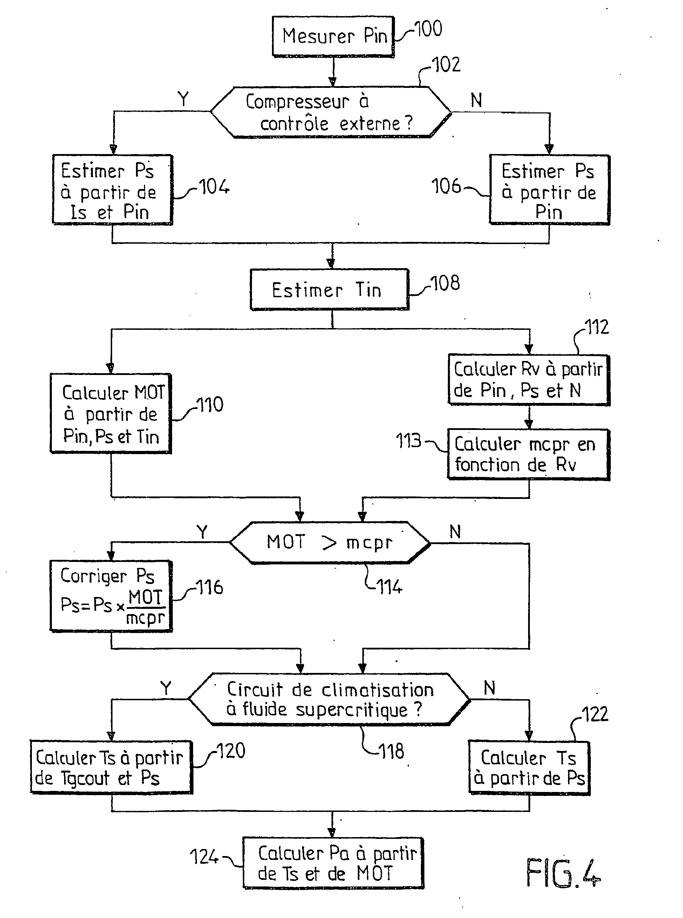

La figure 4 décrit les différentes étapes qui permettent d'aboutir à l'estimation du débit massique du fluide détendu, puis à l'estimation de la puissance absorbée par le compresseur, selon une forme de réalisation particulière.

A l'étape 100, l'installation de climatisation effectue une estimation de $P_{in}$. Avantageusement, le circuit de climatisation comporte un capteur 22, représenté sur la figure 2a, propre à mesurer Pin et transmet cette valeur à la carte électronique 401 par la liaison 30.

Dans les étapes 104 et 106, la carte électronique 401 effectue une estimation initiale de la pression $P_{out}$.

Dans une réalisation avantageuse, illustrée sur la figure 4, cette valeur est estimée par la pression d'aspiration Ps du compresseur, en utilisant les caractéristiques du compresseur.

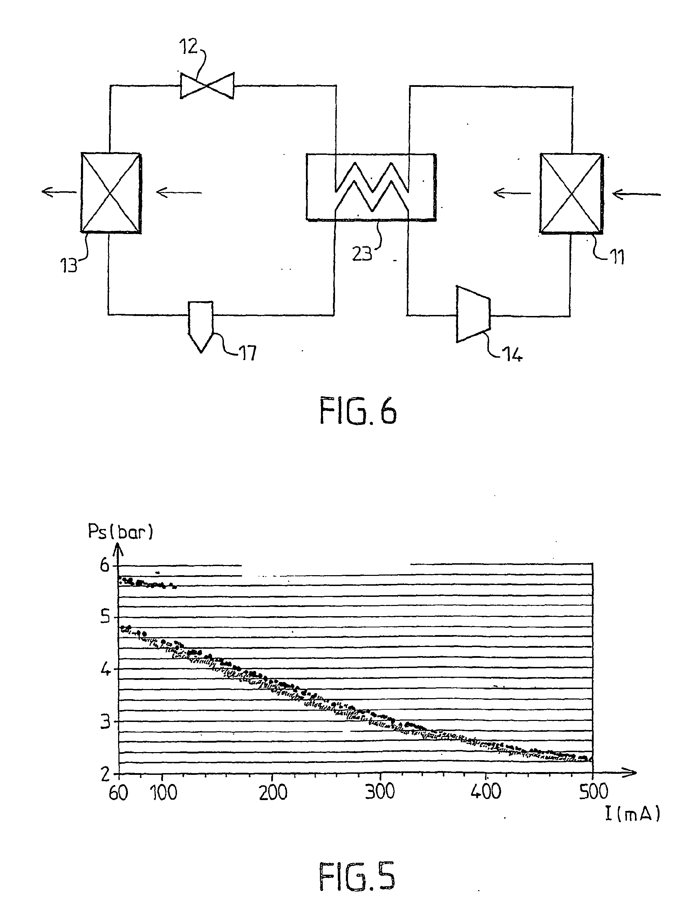

Pour cela, la carte électronique comporte des valeurs pré-enregistrées sous forme de table, constitue la courbe de régulation du compresseur. La figure 5 représente une telle courbe pour un compresseur à contrôle externe. Pour un compresseur à contrôle externe, la pression d'aspiration du compresseur est liée à Is et $P_{in}$, où Is correspond à l'intensité de la vanne de contrôle du compresseur. La table comporte alors deux entrées Is et $P_{in}$. La connaissance de ces deux valeurs permet à la carte de fournir une première estimation de la valeur de Ps (étape 104).

Lorsque le compresseur est à contrôle interne ou à cylindrée fixe, la table comporte la seule entrée $P_{in}$. La pression d'aspiration du compresseur est donc estimée en fonction de $P_{in}$ uniquement (étape 106). Ps est en général proche de 3 bars.

Dans les deux cas, la carte électronique 401 reçoit la valeur d'entrée $P_{in}$ du capteur 22, représenté sur la figure 2a, par la liaison 30. Dans le cas d'un compresseur à contrôle externe, la carte électronique 401 reçoit l'intensité Is du calculateur d'injection du moteur par la liaison 33.

Par ailleurs, dans les deux cas, l'estimation de Ps à partir de la courbe de régulation du compresseur dépend faiblement de la valeur de $P_{in}$.

Toutefois, cette première estimation de la pression d'aspiration du compresseur est erronée lorsque le compresseur est en cylindrée maximale. En cylindrée maximale, la pression d'aspiration du compresseur est supérieure à la valeur obtenue par la courbe de régulation du compresseur ou à partir de $P_{in}$. L'invention permet de déterminer si le compresseur est en cylindrée maximale et de corriger le cas échéant l'erreur d'estimation de la pression d'aspiration Ps. Cette correction forme en partie l'objet des étapes 108 à 116.

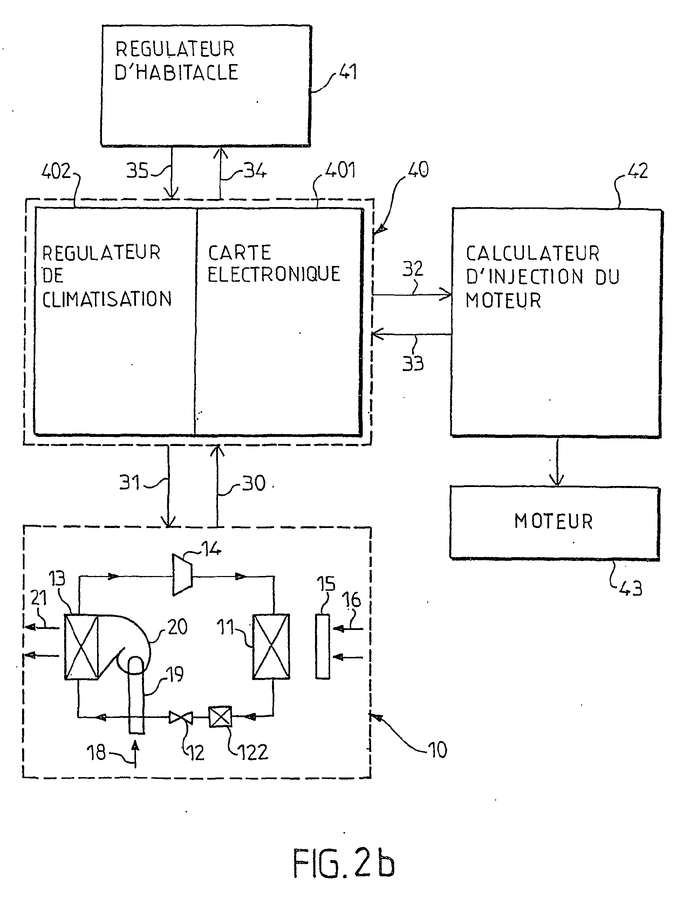

L'étape 108 fournit une estimation de la température $T_{in}$ en entrée du détendeur. Cette température peut être fournie à la carte électronique 401 par un capteur placé à l'entrée de l'orifice calibré. Ce capteur, représenté sur la figure 2b, peut être un capteur de température et de pression pour mesurer à la fois $P_{in}$ et $T_{in}$.

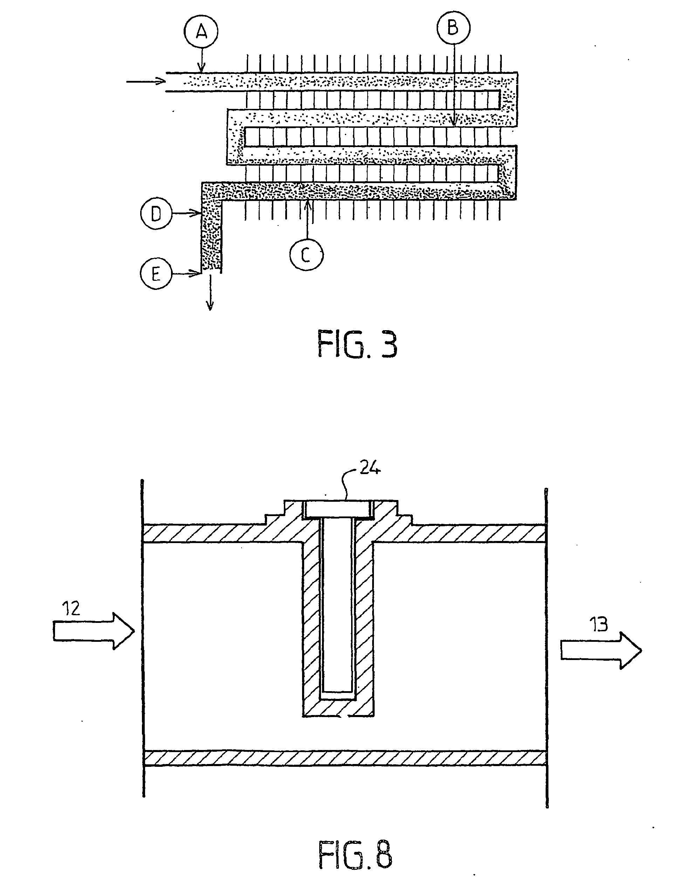

En variante, la température $T_{in}$ peut être estimée par la carte électronique 401, à partir du sous-refroidissement du circuit de climatisation. La figure 3 décrit le fonctionnement d'un condenseur pour un circuit de climatisation fonctionnant avec le fluide R134a. En A, les vapeurs surchauffées par le compresseur entrent dans le condenseur, et se désurchauffent pour atteindre la température de condensation. Au point B, la première goutte de liquide apparaît indiquant le début de la condensation. Le changement d'état se poursuit, entre le point B et le point C, à température constante tandis que la phase liquide devient de plus en plus importante.

La condensation prend fin en D lorsqu'il ne reste plus de goutte de liquide. Le sous-refroidissement du liquide débute et se poursuit jusqu'au point E, à l'entrée de l'orifice calibré pour abaisser la température du liquide. Le sous-refroidissement Sr du fluide correspond donc à la différence entre la température de condensation $T_k$ au point B du fluide et la température au point E en entrée de l'orifice calibré ($T_{in}$).

$$Sr = T_k - T_{in} \quad (3)$$

La première forme de réalisation utilise le sous-refroidissement Sr du liquide pour estimer le débit massique du fluide détendu $m_{OT}$. Cette caractéristique de sous-refroidissement est propre aux fluides sous-critiques. La valeur de la température de condensation est liée à la pression $P_{in}$ conformément à la loi de saturation des fluides. La carte électronique 401 peut alors calculer la valeur de la température de condensation $T_k$ à partir de la valeur de $P_{in}$ fournie par le capteur 22.

En outre, le sous.refroidissement $S_r$ est fonction de la vitesse d'avancement du véhicule Va, de la tension GMV du groupe moto-ventilateur et de la température de l'air extérieur ($T_{ext}$). Selon la première forme de réalisation, la carte électronique (401) peut donc déterminer la température $T_{in}$ à partir de la valeur de $P_{in}$ fournie par le capteur 22 et transmise par la liaison 30, et à partir des valeurs de la vitesse d'avancement du véhicule Va, de la tension GMV du groupe moto-ventilateur et de la température de l'air extérieur ($T_{ext}$, fournies par le calculateur d'injection du moteur 42 par la liaison 32.

A l'étape 108, la carte électronique met alors en oeuvre l'équation (1) pour estimer le débit massique du fluide détendu par l'orifice calibré $m_{OT}$ à partir des valeurs de $P_{in,}$ $P_{out}$ et de $T_{in}$, obtenu comme décrit ci-dessus.

L'annexe A1 représente un exemple de relation 1 utilisée pour calculer $m_{OT}$. Le coefficient a est une constante prenant en compte l'augmentation du débit de fluide frigorigène par rapport à l'accroissement du sous-refroidissement à l'entrée du détendeur. Le coefficient b est une caractéristique géométrique de l'orifice calibré. $\rho_0$ est la masse volumique du fluide calculée à partir de $T_{in}$.

Parallèlement, à l'étape 112, la carte électronique 401 calcule une estimation du rendement volumétrique Rv du compresseur. Comme indiqué par les relations de l'annexe A2.1 et A2.2, le rendement Rv est fonction du taux de compression $\tau$ et de la vitesse de rotation du compresseur N: Le taux de compression correspond au rapport entre la haute pression et la basse pression et peut donc être calculé à partir des pressions $P_{in}$ et Ps. La carte électronique 401 calcule donc une estimation de Rv à partir des valeurs de la pression $P_{in}$ et de la pression Ps estimées comme décrit précédemment et de la valeur de la vitesse de rotation N fournie par le calculateur d'injection (liaison 33).

Le calcul de Rv a pour but d'estimer le débit massique du fluide frigorigène aspiré en cylindrée maximale par le compresseur $m_{CPR}$ à l'étape 113.

A partir des valeurs du débit massique du fluide détendu par l'orifice calibré $m_{OT}$ obtenu à l'étape 110 et du débit massique du fluide frigorigène aspiré en cylindrée maximale par le compresseur $m_{CPR}$ obtenu à l'étape 113, la carte électronique 401 effectue une comparaison entre ces deux valeurs à l'étape 114 pour déterminer si le compresseur est en cylindrée maximale et le cas échéant effectuer une correction de la valeur de Ps.

Un débit $m_{OT}$ inférieur au débit $m_{CPR}$ signifie que le compresseur est en réduction de cylindrée. La valeur de Ps obtenue à l'étape 104 ou 106 reste donc valide.

Un débit $m_{OT}$ voisin du débit $m_{CPR}$, à plus ou moins 30 kg/h signifie que le compresseur est àla limite de sa cylindrée maximale, mais respecte la courbe de régulation du compresseur. La valeur de Ps initiale est encore valide.

Lorsque le débit $m_{OT}$ est supérieur au débit $m_{CPR}$, le compresseur est en cylindrée maximale et la pression d'aspiration a été sous-estimée. Il faut donc corriger la valeur de Ps estimée à l'étape 104 ou 106. Ainsi lorsque la carte électronique 401 détecte une valeur du débit $m_{OT}$ supérieure à la valeur de $m_{CPR}$, elle corrige à l'étape 116 la valeur de Ps, par un facteur de correction correspondant au rapport entre le débit $m_{OT}$ et le débit $m_{CPR}$, comme indiqué par l'annexe A3.

Aux étapes 120 et 122, la carte électronique estime la valeur de la température d'aspiration Ts du compresseur à partir de $P_{out}$. Selon la première forme de réalisation, la valeur de Pout correspond à la valeur de Ps obtenue dans l'une des étapes 104, 106 et 116.

La valeur de Ts intervient dans le calcul de la puissance absorbée par le compresseur Pa.

Plus précisément, la Demanderesse utilise l'estimation du débit massique de fluide frigorigène détendu $m_{OT}$ pour calculer la puissance mécanique absorbée par le compresseur. L'estimation du débit $m_{OT}$ ne dépend que des conditions de température et de pression en entrée et en sortie de l'orifice calibré et fournit donc une bonne précision.

Le dispositif décrit précédemment est agencé pour obtenir les informations qui permettent, selon les relations de l'annexe A4, de calculer la puissance mécanique absorbée (annexe A4.1). Outre le débit massique du fluide détendu, ces informations concernent l'estimation du travail de compression isentropique Wis (annexe A4.1) et la vitesse de rotation du compresseur N. Les constantes B, C et D sont liées à des paramètres de fonctionnement du circuit de climatisation et donc fixées en tant que paramètres de calcul.

A l'étape 124, la carte électronique 401 estime le rapport de compression Pr à partir des valeurs de la pression $P_{in}$ et de la pression $P_{out}$, afin de calculer le travail de compression isentropique Wis. Le travail de compression isentropique Wis est également calculé à partir de la valeur de Ts estimée à l'étape 120 ou 122.

$P_{in}$ et $P_{out}$ sont obtenues lors des estimations précédentes. Par ailleurs, la vitesse de rotation du compresseur N est fournie à la carte électronique par le calculateur d'injection du moteur 42, par la liaison 33 en référence à la figure 2a.

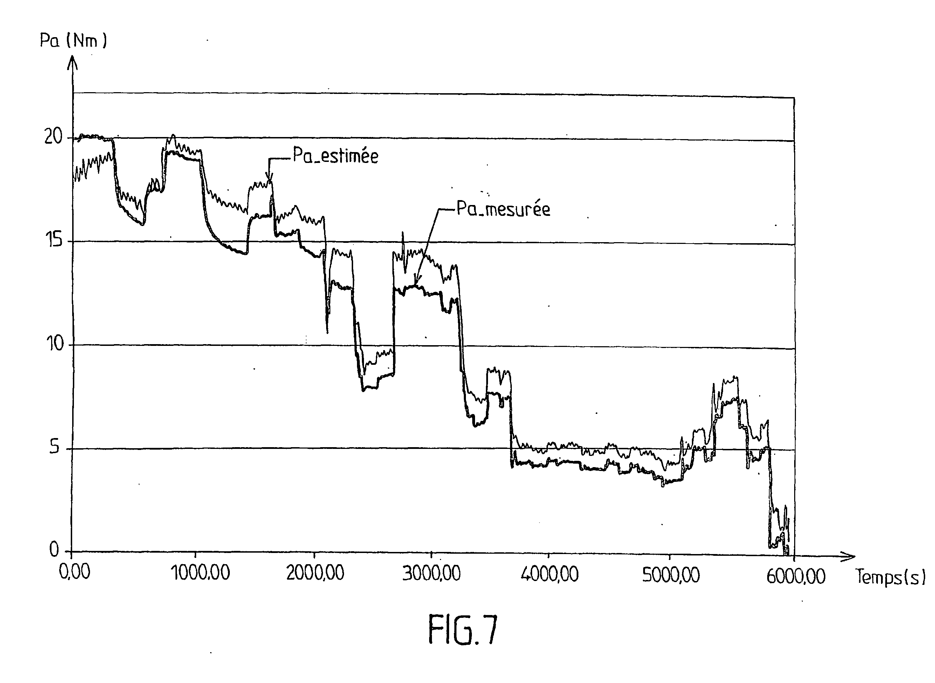

La figure 7 illustre la précision de la mesure de la puissance mécanique selon cette forme de réalisation, pour une température de l'air extérieur de 35°C, une vitesse de rotation de 2000 rpm et un pulseur en position 4. Le graphique montre que l'écart entre la courbe représentant la puissance mécanique absorbée par le compresseur estimée (Pa estimée), et la courbe représentant la puissance mécanique absorbée par le compresseur mesurée (Pa mesurée) est peu important, ce qui indique une précision satisfaisante.

Le calculateur 42 adresse alors au module d'injection du moteur la valeur estimée de la puissance mécanique absorbée par le compresseur. Le calculateur adapte alors la puissance mécanique nominale absorbée par le compresseur si celle-ci dépasse une valeur maximale définie par le calculateur à partir de cette valeur estimée. Par suite la consommation de carburant est réduite et les augmentations excessives de la puissance absorbée par le compresseur sont mieux contrôlées.

Dans le cas des compresseurs mécaniques à contrôle interne, cette puissance estimée est utilisée pour débrayer le compresseur afin de réduire le débit massique de fluide frigorigène absorbé par le compresseur.

Dans une deuxième forme de réalisation, selon l'invention, le circuit de climatisation est parcouru par un fluide frigorigène supercritique, un échangeur thermique interne 23 et un organe de détente 12 de type vanne électrique. Pour les fluides supercritiques, la haute pression à forte température est supérieure à la pression critique du fluide.

Dans cette forme de réalisation l'organe de refroidissement 11 est un refroidisseur externe ("gas cooler"). En particulier, la description qui suit sera faite en référence au fluide frigorigène CO2 à titre d'exemple non limitatif. Un tel circuit de climatisation est représenté sur la figure 6.

Dans les circuits de climatisation utilisant de tels fluides, le refroidissement du fluide après compression n'entraîne pas de changement de phase. Le fluide ne passe à l'état liquide qu'au cours de la détente. L'échangeur thermique interne 23 permet de refroidir très fortement, voire de liquéfier le fluide sortant du refroidisseur externe 11.

A l' étape 100, la pression $P_{in}$ est mesurée comme dans la première forme de réalisation par un capteur.

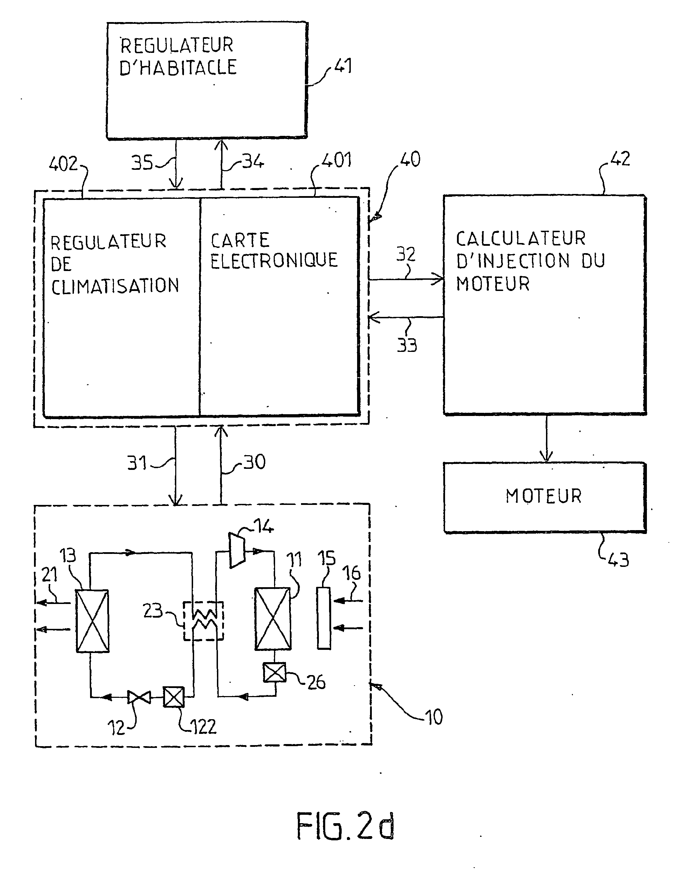

A l'étape 108 de la figure 4, la température $T_{in}$ peut être également mesurée, comme indiqué pour la première forme de réalisation, par exemple par le capteur de température et de pression 122 représenté sur la figure 2d. Ce capteur peut donc fournir simultanément la valeur de $P_{in}$ et de $T_{in}$.

Le fluide CO2 ne subit donc pas de sous-refroidissement. Une estimation de $T_{in}$ à partir de Sr n'est donc plus possible. Dans un circuit de climatisation fonctionnant avec le CO2, la température $T_{in}$ à l'entrée du détendeur est liée à la température d'évaporation du circuit $T_{ev}$, à la température en sortie du refroidisseur externe 11, $T_{gcout}$, et au coefficient d'efficacité de l'échangeur thermique interne 23.

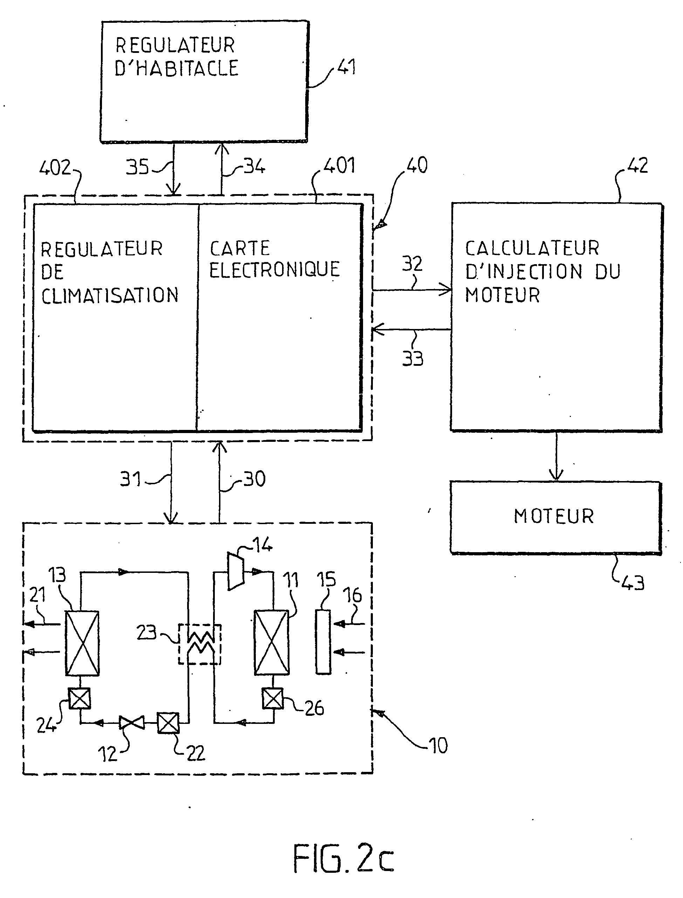

En particulier, la température $T_{ev}$ peut être mesurée par une sonde, désignée par la référence 24 de la figure 2c, qui mesure la température d'évaporation. Cette sonde peut-être une sonde à thermistance, de structure classique, placée dans les ailettes de l'évaporateur. La figure 8 représente une telle sonde 24.

En variante, la température $T_{ev}$ peut être estimée à partir de la température d'air soufflé en sortie de l'évaporateur $T_{soufflé}$ fournie par le régulateur d'habitacle 41.

$T_{gcout}$ peut être mesuré par un capteur de température 26, placé en sortie du refroidisseur externe 11, comme indiqué sur les figures 2c et 2d.

Comme le circuit de climatisation comporte un échangeur thermique interne, la température Ts est estimée à l'étape 120 à partir de $P_{out}$, de la température d'évaporation $T_{ev}$ et de la température en sortie du refroidisseur externe $T_{gcout}$ (annexe A6).

Comme pour la première forme de réalisation, $P_{out}$ peut être estimé par la pression d'aspiration du compresseur Ps. Les étapes d'estimation et de correction de Ps des étapes 108 à 116 s'appliquent identiquement.

La figure 2d correspond à une variante selon la deuxième forme de réalisation, dans laquelle le circuit de climatisation comprend le capteur 122 pour mesurer $P_{in}$ et $T_{in}$ et le capteur 26 pour mesurer $T_{gcout}$, la température d'évaporation $T_{ev}$ étant estimée à partir de la température d'air soufflé $T_{soufflé}$ et $P_{out}$ à partir de l'estimation de la pression d'aspiration Ps.
Le modèle d'estimation de la puissance mécanique de l'annexe A4 reste valable pour la deuxième forme de réalisation.

Dans une première variante, selon les deux formes de réalisation, la pression $P_{out}$ peut être directement mesurée par un capteur 28, représenté sur la figure 2a. Ce capteur peut-être placé à tout endroit voulu entre l'évaporateur et le compresseur. Cette mesure est transmise à la carte électronique 401, par la liaison 30.

Dans une deuxième variante, selon les deux formes de réalisation, la valeur la pression $P_{out}$ peut être estimée indirectement, à partir de l'estimation de la température d'évaporation $T_{ev}$. L'estimation de cette température a été décrite précédemment, pour la deuxième forme de réalisation. La carte électronique 401 estime alors $P_{out}$ en appliquant la loi de saturation des fluides.

Dans la deuxième forme de réalisation, la température d'évaporation $T_{ev}$ peut être estimée pour calculer $T_{in}$ et pour calculer Ts. Il est donc particulièrement avantageux d'estimer $P_{out}$ en fonction de $T_{ev}$ pour la deuxième forme de réalisation.

L'annexe A5 comporte un exemple de relation liant $T_{in}$, $P_{in}$ et $P_{out}$, conformément à la relation 1. La fonction k est une caractéristique définissant l'ouverture de la vanne électrique 12 en fonction du courant Iv soumis à la vanne. Iv est fournie par le régulateur de climatisation 402. $\rho_0$ est la densité du fluide à l'entrée de la vanne électrique et est estimé à partir de $T_{in}$ et de $P_{in}$.

Annexe A

A1. Débit massique d'un fluide frigorigène détendu dans un orifice calibré $m_{OT}$

$$m_{OT} = (1 + a.\ S_r).b.\sqrt{[\rho_0.(P_{in} - P_{out})]}\ .$$

A2. Rendement volumétrique Rv

A2.1 - Forme générale du Rendement volumétrique

$$Rv = f(\tau, N)$$

$$\tau = P_{in}/P_{out}$$

A2.2 - Exemple de rendement volumétrique

$$Rv = (C(N) - D(N))* \tau$$

A3. Correction de la pression d'aspiration Ps

$$Ps = Ps_{initiale} * (m_{OT}/m_{CPR})\ si\ m_{OT} > m_{CPR}$$

A4. Puissance absorbée par le compresseur Pa

A4.1. Travail isentropique Wis

$$Wis = C.Ts.(Pr^{(n-1)/n} - 1)$$

A4.2. Puissance absorbée par le compresseur

$$Pa = A\ .m_{OT}.Wis + B.N$$

A5. Débit massique d'un fluide frigorigène détendu dans une vanne électrique $m_{OT}$-

$$m_{OT} = k(I_v).\sqrt{[\rho_{0.}(P_{in} - P_{out})]}$$

$$\rho_0 = \text{fonction } (P_{in}, T_{in})$$

A6. Température d'aspiration Ts dans un circuit à fluide supercritique

$$Ts = H_{xi} (T_{gcout} - T_{ev}) + T_{ev}$$

$H_{xi}$ : coefficient d'efficacité de l'échangeur interne

**Revendications**

1. Installation de climatisation pour véhicule à moteur munie d'un calculateur d'injection (42) et d'un régulateur de climatisation (402),
   l'installation comprenant un circuit de fluide frigorigène comprenant un compresseur (14), un organe de refroidissement (11), un organe de détente (12) et un évaporateur (13), ainsi qu'un dispositif électronique de contrôle (401) destiné à interagir avec le circuit de fluide frigorigène (10), le calculateur d'injection (42) et le régulateur de climatisation (402), **caractérisée en ce qu'**elle comprend des organes de mesures propres à transmettre des valeurs au dispositif électronique de contrôle pour l'estimation :

   - d'une première valeur relative à la température du fluide frigorigène en entrée de l'organe de détente ($T_{in}$),
   - d'une deuxième valeur relative à la pression du fluide frigorigène en entrée de l'organe de détente ($P_{in}$),
   - d'une troisième valeur relative à la pression du fluide frigorigène en sortie de l'organe de détente ($P_{out}$),

   et **en ce que** le dispositif électronique de contrôle (401) est apte à calculer la valeur du débit massique du fluide frigorigène dans l'organe de détente ($m_{OT}$) à partir de l'estimation desdites première, deuxième et troisième valeurs, et à estimer, à partir de cette valeur du débit massique du fluide frigorigène dans l'organe de détente ($m_{OT}$) et de l'estimation de la troisième valeur ($P_{out}$), la puissance absorbée par le compresseur (14).

2. Installation de climatisation selon la revendication 1, **caractérisée en ce que** l'organe de détente est un orifice de section fixe et **en ce que** l'organe de refroidissement (11) est un condenseur.

3. Installation de climatisation selon la revendication 1, **caractérisée en ce qu'**elle comprend un échangeur thermique interne et **en ce que** l'organe de détente est un orifice de section variable et le fluide frigorigène est supercritique.

4. Installation de climatisation selon la revendication 3, **caractérisé en ce que** l'organe de détente est une vanne électrique et **en ce que** le débit massique du fluide frigorigène est en outre estimé à partir de la valeur de l'intensité de la vanne électrique (Iv) fournie par le régulateur de climatisation (402).

5. Installation de climatisation selon l'une des revendications précédentes, **caractérisée en ce que** la première valeur est mesurée par un organe de mesure (122), placé à l'entrée de l'organe de détente.

6. Installation de climatisation selon l'une des revendications précédentes, **caractérisée en ce que** la deuxième valeur est mesurée par un organe de mesure (22, 122) placé à l'entrée de l'organe de détente.

7. Installation de climatisation selon la revendication 2, **caractérisée en ce que** le dispositif électronique de contrôle est propre à calculer une estimation de la première valeur à partir d'informations relatives au fonctionnement du véhicule, transmises par le calculateur d'injection (42) et de la deuxième valeur ($P_{in}$).

8. Installation de climatisation selon la revendication 7, **caractérisée en ce que** les informations relatives au fonctionnement du véhicule sont la vitesse d'avancement du véhicule (Va), la tension du groupe moto-ventilateur du circuit de climatisation (GMV) et la température du flux d'air extérieur ($T_{ext}$).

9. Installation de climatisation selon la revendication 3, **caractérisée en ce qu'**elle comprend un premier organe de mesure (26) propre à fournir une valeur relative à la température en sortie de l'organe de refroidissement ($T_{gcout}$).

10. Installation de climatisation selon l'une des revendication précédentes, **caractérisée en ce qu'**elle comprend un deuxième organe de mesure propre à fournir une valeur relative à la température d'évaporation ($T_{ev}$).

11. Installation de climatisation selon la revendication 10, **caractérisée en ce que** le deuxième organe de mesure est une sonde (24), placée dans les ailettes de l'évaporateur (13), qui fournit une mesure de la valeur instantanée de la température d'évaporation.

12. Installation de climatisation selon l'une des revendication 1 à 9, **caractérisée en ce qu'**elle comporte un régulateur d'habitacle (41) et **en ce que** le dispositif électronique de contrôle est apte à estimer la valeur de la température d'évaporation ($T_{ev}$) à partir de la valeur instantanée de la température d'air soufflé en sortie de l'évaporateur ($T_{soufflé}$) fournie par le régulateur d'habitacle (41).

13. Installation de climatisation selon la revendication 9 prise en combinaison avec l'une des revendications 10 à 12, **caractérisée en ce que** le dispositif électronique de contrôle (401) est propre à calculer une estimation de la première valeur à partir des valeurs fournies par le premier et le deuxième organe de mesure ($T_{gcout}$, $T_{ev}$).

14. Installation de climatisation selon l'une des revendications 10 à 12, **caractérisée en ce que** le dispositif électronique de contrôle est propre à estimer la troisième valeur ($P_{out}$) à partir de la valeur fournie par le deuxième organe de mesure ($T_{ev}$).

15. Installation de climatisation selon l'une des revendications 1 à 13, **caractérisée en ce que** le compresseur est un compresseur à contrôle externe, muni d'une vanne de contrôle et **en ce que** le dispositif électronique de contrôle est propre à calculer une première estimation de la troisième valeur à partir de valeurs pré-enregistrées de la pression d'aspiration du compresseur ($Ps$), de la deuxième valeur ($P_{in}$) et de la valeur de l'intensité de la vanne de contrôle du compresseur transmise par le calculateur d'injection (42).

16. Installation de climatisation selon l'une des revendications 1 à 13, **caractérisée en ce que** le compresseur est un compresseur à contrôle interne et **en ce que** le dispositif électronique de contrôle est propre à calculer une première estimation de la troisième valeur à partir de valeurs pré-enregistrées de la pression d'aspiration du compresseur ($Ps$), et de la deuxième valeur.

17. Installation de climatisation selon l'une des revendications 1 à 13, **caractérisée en ce que** le compresseur est un compresseur à cylindrée fixe et **en ce que** le dispositif électronique de contrôle est propre à calculer une première estimation de la troisième valeur à partir de valeurs pré-enregistrées de la pression d'aspiration du compresseur ($Ps$), et de la deuxième valeur.

18. Installation de climatisation selon l'une des revendications 15 à 17, **caractérisée en ce que** le dispositif électronique de contrôle est propre à fournir une estimation du débit massique du compresseur en cylindrée maximale ($m_{CPR}$) à partir de la deuxième et de la troisième valeur ($P_{in}$, $P_{out}$).

19. Installation de climatisation selon la revendication 18, **caractérisée en ce que** le dispositif électronique de contrôle (401) est propre à ajuster la première estimation de la troisième valeur en comparant le débit massique estimé du fluide frigorigène dans l'organe de détente ($m_{OT}$) au débit massique du compresseur en cylindrée maximale ($m_{CPR}$).

20. Installation de climatisation selon la revendication 19, **caractérisée en ce que** le dispositif électronique de contrôle est apte à ajuster la première estimation de la troisième valeur par un facteur de correction, lorsque le débit massique du fluide frigorigène dans l'organe de détente ($m_{OT}$) est supérieur au débit massique du compresseur en cylindrée maximale ($m_{CPR}$).

21. Installation de climatisation selon la revendication 20, **caractérisée en ce que** le facteur de correction est relatif au rapport entre le débit massique du fluide frigorigène dans l'organe de détente ($m_{OT}$) et le débit massique du compresseur en cylindrée maximale ($m_{CPR}$).

22. Installation de climatisation selon l'une des revendications 1 à 13, **caractérisée en ce que** la troisième valeur ($P_{out}$) est fournie par un organe de mesure (28) placé à l'entrée du compresseur.

23. Installation de climatisation selon la revendication 9, **caractérisée en ce que** la puissance absorbée par le compresseur (Pa) est en outre estimée à partir de la valeur relative à la température en sortie de l'organe de refroidissement ($T_{gcout}$).

**Claims**

1. An air-conditioning installation for a motor vehicle provided with an injection calculator (42) and an air-conditioning regulator (402),
   the installation comprising a refrigerant fluid circuit comprising a compressor (14), a cooling unit (11), an expansion unit (12) and an evaporator (13), a well as an electronic control device (401) for interacting with the refrigerant fluid circuit (10), the injection calculator (42) and the air-conditioning regulator (402),
   **characterized in that** it comprises specific measuring units for transmitting values to the electronic control device in order to estimate:

   - a first value relative to the temperature of the refrigerant fluid at the inlet of the expansion unit ($T_{in}$).
   - a second value relative to the refrigerant fluid pressure at the inlet of the expansion unit ($P_{in}$),
   - a third value relative to the pressure of the refrigerant fluid at the outlet of the expansion unit ($P_{out}$).

   and **in that** the electronic control device (401) is able to calculate the value of the mass flow _rate of the refrigerant fluid in the expansion unit ($m_{OT}$) from the estimation of said first, second and third values,
   and to estimate from this value of the mass flow rate of the refrigerant fluid in the expansion unit ($m_{OT}$) and from the estimation of the third value (($P_{out}$), the power absorbed by the compressor (14).

2. The air-conditioning installation according to claim 1, **characterized in that** the expansion unit is a port with a fixed section and **in that** the cooling unit (11) is a condenser.

3. The air-conditioning installation according to claim 1, **characterized in that** it comprises an internal heat exchanger and **in that** the expansion unit is a port with a variable section and the refrigerant fluid is supercritical.

4. The air-conditioning installation according to claim 3, **characterized in that** the expansion unit is an electric valve and **in that** the mass flow rate of the refrigerant fluid is further estimated from the value of the intensity of the electric valve (Iv) provided by the air-conditioning regulator (402).

5. The air-conditioning installation according to any of the preceding claims, **characterized in that** the first value is measured by a measuring unit (122), placed at the inlet of the expansion unit.

6. The air-conditioning installation according to any of the preceding claims, **characterized in that** the second value is measured by a measuring unit (22, 122) placed at the inlet of the expansion unit.

7. The air-conditioning installation according to claim 2, **characterized in that** the electronic control device is suitable for calculating an estimation of the first value from information relative to the operation of the vehicle, transmitted by the injection calculator (42) and the second value ($P_{in}$).

8. The air-conditioning installation according to claim 7, **characterized in that** the information relative to the operations of the vehicle are the forward speed of the vehicle (Va), the voltage of the fan and motor unit of the air-conditioning circuit (GMV) and the temperature of the outside airflow ($T_{ext}$).

9. The air-conditioning installation according to claim 3, **characterized in that** it comprises a first measuring unit (26) suitable for providing a value relative to the temperature at the outlet of the cooling unit ($T_{gcout}$).

10. The air-conditioning installation according to any of the preceding claims, **characterized in that** it comprises a second measuring unit suitable for providing a value relative to the evaporation temperature ($T_{ev}$).

11. The air-conditioning installation according to claim 10, **characterized in that** the second measuring unit is a probe (24), placed in the fins of the evaporator (13), which provides a measurement of the instantaneous value of the evaporation temperature.

12. The air-conditioning installation according to any of claims 1 to 9, **characterized in that** it includes a passenger compartment regulator (41) and **in that** the electronic control device is able to estimate the value of the evaporation temperature ($T_{ev}$) from the instantaneous value of the blown air temperature at the outlet of the evaporator ($T_{souflé}$) provided by the passenger room regulator (41).

13. The air-conditioning installation according to claim 9, taken in combination with any of claims 10 to 12, **characterized in that** the electronic control device (401) is suitable for calculating an estimation of the first value from values provided by the first and the second measuring unit ($T_{gcout}$, $T_{ev}$).

14. The air-conditioning installation according to any of claims 10 to 12, **characterized in that** the electronic control device is suitable for estimating the third value ($P_{out}$) from the value provided by the second measuring unit ($T_{ev}$).

15. The air-conditioning installation according to any of claims 1 to 13, **characterized in that** the compressor is a compressor with an external control, provided with a control valve and **in that** the electronic control device is suitable for calculating a first estimation of the third value from pre-recorded values of the suction pressure of the compressor (Ps), of the second value (Pin) and of the value of the intensity of the control valve of the compressor transmitted by the injection calculator (42).

16. The air-conditioning installation according to any of claims 1 to 13, **characterized in that** the compressor is a compressor with an internal control and **in that** the electronic control device is suitable for calculating a first estimation of the third value from pre-recorded values of the suction pressure of the compressor (Ps) and of the second value.

17. The air-conditioning installation according to any of claims 1 to 13, **characterized in that** the compressor is a compressor with a fixed cylinder capacity and **in that** the electronic control device is suitable for calculating a first estimation of the third value from pre-recorded values of the suction pressure of the compressor (Ps) and of the second value.

18. The air-conditioning installation according to any of claims 15 to 17, **characterized in that** the electronic control device is suitable for providing an estimation of the mass flow rate of the compressor with maximum cylinder capacity ($m_{cpr}$) from the second and the third value ($P_{in}$, $P_{out}$).

19. The air-conditioning installation according to claim 18, **characterized in that** the electronic control device (401) is suitable for adjusting the first estimation of the third value by comparing the estimated mass flow rate of the refrigerant fluid in the expansion unit ($m_{OT}$) to the mass flow rate of the compressor with maximum cylinder capacity ($m_{CPR}$).

20. The air-conditioning installation according to claim 19, **characterized in that** the electronic control device is able to adjust the first estimation of the third value by a correction factor, when the mass flow rate of the refrigerant fluid in the expansion unit ($m_{OT}$) is larger than the mass flow rate of the compressor with maximum cylinder capacity ($m_{CPR}$).

21. The air-conditioning installation according to claim 20, **characterized in that** the correction factor is relative to the ratio between the mass flow rate of the refrigerant fluid in the expansion unit ($m_{OT}$) and the mass flow rate of the compressor with maximum cylinder capacity ($m_{CPR}$).

22. The air-conditioning installation according to any of claims 1 to 13, **characterized in that** the third value ($P_{out}$) is provided by a measuring unit (28) placed at the inlet of the compressor.

23. The air-conditioning installation according to claim 9, **characterized in that** the power absorbed by the compressor (Pa) is further estimated from the value relative to the temperature at the outlet of the cooling unit ($T_{gcout}$).

**Patentansprüche**

1. Klimaanlage für ein Kraftfahrzeug, ausgestattet mit einem Einspritzrechner (42) und einem Klimatisierungsregler (402),

wobei die Anlage einen Kältemittelkreislauf aufweist, der einen Kompressor (14), ein Kühlorgan (11), ein Entspannungsorgan (12) und einen Verdampfer (13) aufweist sowie eine elektronische Kontrollvorrichtung (401), die dazu bestimmt ist, mit dem Kältemittelkreislauf (10), dem Einspritzrechner (42) und dem Klimatisierungsregler (402) zusammenzuwirken, **dadurch gekennzeichnet, dass** sie Messorgane aufweist, die zur Übertragung der Werte an die elektronische Kontrollvorrichtung geeignet sind zur überschläglichen Berechnung:

- eines ersten Werts, der sich auf die Temperatur des Kältemittels am Eingang des Entspannungsorgans ($T_{in}$) bezieht,
- eines zweiten Werts, der sich auf den Druck des Kältemittels am Eingang des Entspannungsorgans ($P_{in}$) bezieht,
- eines dritten Werts, der sich auf den Druck des Kältemittels am Ausgang des Entspannungsorgans ($P_{out}$) bezieht,

und **dadurch**, dass die elektronische Kontrollvorrichtung (401) in der Lage ist, den Wert des Massenstroms des Kältemittels im Entspannungsorgan ($m_{OT}$) aus der überschläglichen Berechnung des besagten ersten, zweiten und dritten Werts zu berechnen, und aus diesem Massenstromwert des Kältemittels im Entspannungsorgan ($m_{OT}$) und der überschläglichen Berechnung des dritten Werts ($P_{out}$) die Leistungsaufnahme des Kompressors (14) überschläglich zu berechnen.

2. Klimaanlage nach Anspruch 1, **dadurch gekennzeichnet, dass** das Entspannungsorgan eine Öffnung mit feststehendem Querschnitt ist und **dadurch**, dass das Kühlorgan (11) ein Kühler ist.

3. Klimaanlage nach Anspruch 1, **dadurch gekennzeichnet, dass** sie einen internen Wärmetauscher aufweist und **dadurch**, dass das Entspannungsorgan eine Öffnung mit variablem Querschnitt ist und das Kältemittel superkritisch ist.

4. Klimaanlage nach Anspruch 3, **dadurch gekennzeichnet, dass** das Entspannungsorgan ein elektrisches Schütz ist und **dadurch**, dass der Massenstrom des Kältemittels unter anderem aus dem vom Klimatisierungsregler (402) gelieferten Intensitätswert des elektrischen Schützes (Iv) überschläglich berechnet wird.

5. Klimaanlage nach einem der vorhergehenden Ansprüche, **dadurch gekennzeichnet, dass** der erste Wert von einem Messorgan (122) gemessen wird, das am Eingang des Entspannungsorgans platziert ist.

6. Klimaanlage nach einem der vorhergehenden Ansprüche, **dadurch gekennzeichnet, dass** der zweite Wert von einem Messorgan (22, 122) gemessen wird, das am Eingang des Entspannungsorgans platziert ist.

7. Klimaanlage nach Anspruch 2, **dadurch gekennzeichnet, dass** die elektronische Kontrollvorrichtung geeignet ist, einen Überschlagswert des ersten Werts aus Informationen, die sich auf die Funktionsweise des Fahrzeugs beziehen, zu berechnen, die vom Einspritzrechner (42) übertragen werden, und dem zweiten Wert ($P_{in}$).

8. Klimaanlage nach Anspruch 7, **dadurch gekennzeichnet, dass** die Informationen, die sich auf die Funktionsweise des Fahrzeugs beziehen, die Fahrgeschwindigkeit des Fahrzeugs (Va), die Spannung der Motor-Ventilator-Gruppe des Klimatisierungskreislaufs (GMV) und die Temperatur des Außenluftstroms (Text) sind.

9. Klimaanlage nach Anspruch 3, **dadurch gekennzeichnet, dass** sie ein erstes Messorgan (26) aufweist, das geeignet ist, einen Wert bezüglich der Temperatur am Ausgang des Kühlorgans ($T_{gcout}$) zu liefern.

10. Klimaanlage nach einem der vorhergehenden Ansprüche, **dadurch gekennzeichnet, dass** sie ein zweites Messorgan aufweist, das geeignet ist, einen Wert bezüglich der Verdampfungstemperatur ($T_{ev}$) zu liefern.

11. Klimaanlage nach Anspruch 10, **dadurch gekennzeichnet, dass** das zweite Messorgan eine Sonde (24) ist, die in den Flügeln des Verdampfers (13) platziert ist, die eine Messung des Momentanwerts der Verdampfungstemperatur liefert.

12. Klimaanlage nach einem der Ansprüche 1 bis 9, **dadurch gekennzeichnet, dass** sie einen Fahrgastzellenregler (41) aufweist und **dadurch**, dass die elektronische Kontrollvorrichtung in der Lage ist, den Wert der Verdampfungstemperatur ($T_{ev}$) aus dem vom Fahrgastzellenregler (41) gelieferten Momentanwert der Gebläselufttemperatur am Ausgang des Verdampfers ($T_{soufflé}$) überschläglich zu berechnen.

13. Klimaanlage nach Anspruch 9, mit einem der Ansprüche 10 bis 12 zusammenfassend herangezogen, **dadurch gekennzeichnet, dass** die elektronische Kontrollvorrichtung (401) geeignet ist, einen Überschlagswert des ersten Werts aus den Werten, die vom ersten und zweiten Messorgan ($T_{gcout}$, $T_{ev}$) geliefert werden, zu berechnen.

14. Klimaanlage nach einem der Ansprüche 10 bis 12, **dadurch gekennzeichnet, dass** die elektronische Kontrollvorrichtung geeignet ist, den dritten Wert ($P_{out}$) aus dem vom zweiten Messorgan ($T_{ev}$) gelieferten Wert überschläglich zu berechnen.

15. Klimaanlage nach einem der Ansprüche 1 bis 13,
**dadurch gekennzeichnet, dass** der Kompressor ein Kompressor mit externer Kontrolle ist, ausgestattet mit einem Kontrollschütz, und **dadurch**, dass die elektronische Kontrollvorrichtung geeignet ist, einen ersten Überschlagswert des dritten Werts aus vorher aufgezeichneten Werten des Ansaugdrucks des Kompressors (Ps), dem zweiten Wert ($P_{in}$) und dem Intensitätswert des Kontrollschützes des Kompressors, der vom Einspritzrechner (42) übertragen wird, zu berechnen.

16. Klimaanlage nach einem der Ansprüche 1 bis 13,
**dadurch gekennzeichnet, dass** der Kompressor ein Kompressor mit interner Kontrolle ist, und **dadurch**, dass die elektronische Kontrollvorrichtung geeignet ist, einen ersten Überschlagswert des dritten Werts aus vorher aufgezeichneten Werten des Ansaugdrucks des Kompressors (Ps) zu berechnen und dem zweiten Wert.

17. Klimaanlage nach einem der Ansprüche 1 bis 13,
**dadurch gekennzeichnet, dass** der Kompressor ein Kompressor mit unveränderlichem Hubraum ist und **dadurch**, dass die elektronische Kontrollvorrichtung geeignet ist, einen ersten Überschlagswert des dritten Werts aus vorher aufgezeichneten Werten des Ansaugdrucks des Kompressors (Ps) zu berechnen und dem zweiten Wert.

18. Klimaanlage nach einem der Ansprüche 15 bis 17, **dadurch gekennzeichnet, dass** die elektronische Kontrollvorrichtung geeignet ist, einen Überschlagswert des Massenstroms des Kompressors bei maximalem Hubraum ($m_{CPR}$) aus dem zweiten und dem dritten Wert ($P_{in}$, $P_{out}$) zu liefern.

19. Klimaanlage nach Anspruch 18, **dadurch gekennzeichnet, dass** die elektronische Kontrollvorrichtung (401) geeignet ist, den ersten Überschlagswert des dritten Werts durch Vergleich des überschläglich berechneten Massenstroms des Kältemittels im Entspannungsorgan ($m_{OT}$) mit dem Massenstrom des Kompressors bei maximalem Hubraum ($m_{CPR}$) abzugleichen.

20. Klimaanlage nach Anspruch 19, **dadurch gekennzeichnet, dass** die elektronische Kontrollvorrichtung in der Lage ist, den ersten Überschlagswert des dritten Werts durch einen Korrekturfaktor abzugleichen, wenn der Massenstrom des Kältemittels im Entspannungsorgan ($m_{OT}$) größer ist als der Massenstrom des Kompressors bei maximalem Hubraum ($m_{CPR}$).

21. Klimaanlage nach Anspruch 20, **dadurch gekennzeichnet, dass** sich der Korrekturfaktor auf das Verhältnis zwischen dem Massenstrom des Kältemittels im Entspannungsorgan ($m_{OT}$) und dem Massenstrom des Kompressors bei maximalem Hubraum ($m_{CPR}$) bezieht.

22. Klimaanlage nach einem der Ansprüche 1 bis 13,
**dadurch gekennzeichnet, dass** der dritte Wert ($P_{out}$) von einem Messorgan (28) geliefert wird, das am Eingang des Kompressors platziert ist.

23. Klimaanlage nach Anspruch 9, **dadurch gekennzeichnet, dass** die vom Kompressor (Pa) aufgenommene Leistung unter anderem aus dem Wert überschläglich berechnet wird, der sich auf die Temperatur am Ausgang des Kühlorgans ($T_{gcout}$) bezieht.

FIG.1

REGULATEUR
D'HABITACLE 41

402 35 34 401 40 42

REGULATEUR
DE
CLIMATISATION | CARTE
ELECTRONIQUE

32

CALCULATEUR
D'INJECTION DU
MOTEUR

33

31 30

28 14

13 20 11 15 16

21

19

18 12 22

10

MOTEUR

43

FIG.2a

REGULATEUR
D'HABITACLE — 41

402 — 35 — 34 — 401 — 40

42

REGULATEUR
DE
CLIMATISATION

CARTE
ELECTRONIQUE

32

CALCULATEUR
D'INJECTION DU
MOTEUR

33

31 — 30

43

MOTEUR

14

13

21

20

11

15

16

19

18

12

122

10

FIG.2b

FIG.2c

FIG.2d

FIG. 3

FIG.8

```
                    ┌──────────────┐
                    │ Mesurer Pin  │──100
                    └──────────────┘
                           │
                           ▼
              Y    ╱────────────────────╲    N
          ┌────────   Compresseur à        ────────┐
          │        ╲  contrôle externe?  ╱         │
          │         ╲──────────────────╱           │
          │              102                       │
          ▼                                         ▼
  ┌──────────────┐                        ┌──────────────┐
  │ Estimer Ps   │                        │ Estimer Ps   │
  │ à partir de  │──104              106──│ à partir de  │
  │ Is et Pin    │                        │ Pin          │
  └──────────────┘                        └──────────────┘
          │                                         │
          └────────────────┬────────────────────────┘
                           ▼
                    ┌──────────────┐
                    │ Estimer Tin  │──108
                    └──────────────┘
                           │
          ┌────────────────┴────────────────────────┐
          │                                          │
          │                                          ▼
          │                          ┌───────────────────────────┐
          │                          │ Calculer Rv à partir      │──112
          │                          │ de Pin, Ps et N           │
          │                          └───────────────────────────┘
          ▼                                          │
  ┌──────────────┐                                   ▼
  │ Calculer MOT │                     113──┌───────────────────────┐
  │ à partir de  │──110                     │ Calculer mcpr en      │
  │ Pin, Ps et Tin │                        │ fonction de Rv        │
  └──────────────┘                          └───────────────────────┘
          │                                          │
          └──────────────┬───────────────────────────┘
                         ▼
            Y    ╱──────────────────╲    N
        ┌────────   MOT > mcpr        ────────┐
        │        ╲──────────────────╱         │
        │              114                    │
        ▼                                     │
  ┌──────────────┐                            │
  │ Corriger Ps  │                            │
  │ Ps=Ps × MOT  │──116                       │
  │        mcpr  │                            │
  └──────────────┘                            │
        │                                     │
        └──────────────┬──────────────────────┘
                       ▼
          Y    ╱────────────────────────╲    N
      ┌────────   Circuit de climatisation  ────────┐
      │        ╲  à fluide supercritique?  ╱         │
      │         ╲──────────────────────╱             │
      │              118                             │
      ▼                                              ▼
┌──────────────────┐                        ┌──────────────┐
│ Calculer Ts à partir │──120               │ Calculer Ts  │──122
│ de Tgcout et Ps  │                        │ à partir de Ps │
└──────────────────┘                        └──────────────┘
      │                                              │
      └──────────────────┬───────────────────────────┘
                         ▼
            124──┌──────────────────────┐
                 │ Calculer Pa à partir │        FIG.4
                 │ de Ts et de MOT      │
                 └──────────────────────┘
```

FIG.6

FIG.5

FIG.7